# EUROPEAN PATENT APPLICATION

(11) **EP 2 341 332 A1**
(43) Date of publication of application: **06.07.2011**
(21) Application number: 10150024.7
(22) Date of filing: 04.01.2010
(51) Int. Cl.: G01N 22/02

(54) **Method and means for detecting faults in laminated structures.**

(71) Applicant: Nederlandse Organisatie voor Toegepast -Natuurwetenschappelijk Onderzoek TNO, 2628 VK Delft (NL)
(72) Inventor: Theeuwes, Johannes Adrianus Cornelis, 5658 GJ Eindhoven (NL); Visser, Hubregt Jannis, 5508 DC Veldhoven (NL)
(74) Representative: Hatzmann, Martin

(57) **Abstract**

System for detecting faults in laminated structures, comprising at a surface of said laminated structure (1), an array or matrix either of one or more RF transmitters and receivers or of two or more RF transceivers (7); and a control and processing centre arranged for activating, in an initial stage in which the laminated structure (1) is deemed to be faultless, said one or more RF transmitters or transceivers to transmit a measuring signal (10) in a surface wave mode, comprising a surface wave (11) which is suitable to travel along the structure's surface and/or in a bound mode, comprising a surface wave (12) which is suitable to travel through the structure, however being bounded inside the structure's surfaces, and measuring the mutual signal attenuation and/or phase and/or reflection data; storing the measured signal attenuation and/or phase and/or reflection data; activating, in an operational stage, in which the laminated structure (1) could be faultless or faulty, said one or more RF transmitters or transceivers (7) to transmit a measuring signal in a surface wave mode, comprising a surface wave (11) which is suitable to travel along the structure's surface and/or in a bound mode, comprising a surface wave (12) which is suitable to travel through the structure, however being bounded inside the structure's surfaces, and measuring the mutual signal attenuation and/or phase and/or reflection data; comparing the signal attenuation and/or phase and/or reflection data in said initial stage to the signal attenuation and/or phase and/or reflection data in the operational stage; calculating, from the comparison result, whether the laminated structure is or is not faulty and determining, if possible, the faulty location or locations.

## Description

The invention refers to a method and means for detecting faults in laminated or layered structures, e.g. of wind turbine wings.

Nowadays more and more is demanded from all kinds of structures. For example airplane wings are made lighter and lighter making it more vulnerable to all kinds of defects and defects become harder and harder to detect. Rotor blades of wind turbines can be up to 65 m wide and are made of extremely light weighted glass fibre composites. Because these structures are under a lot of stress during use, monitoring techniques are desired to assess whether these structures are still reliable.

Current systems suffer from different disadvantages. Techniques mostly used for inspection of rotor blades are thermal inspection, ultrasound techniques or simply tapping. The former is a method which has to be performed offline, takes quite a lot of time and is rather expensive. The latter method has to be performed offline as well, is labour intensive and requires a trained operator. Further, both techniques are local inspection techniques, in contrast to wide area monitoring techniques.

One aim of the method according to the invention is to enable that the health of the blades can be continuously monitored in stead of inspecting them at regular intervals with costly down times.

Another aim is to provide a cheap technique, since no labour is involved and no expensive equipment is required, although the technique proposed here is less accurate than some alternatives, due to the fact that a whole area is monitored at once with one single sensor setup in stead of one distinct location. Nevertheless this technique can be used as a valuable early warning system and can increase the interval time of regular inspections or maybe even replace regular inspections.

According to the invention, a method is preferred for detecting faults in laminated structures, the method comprising next steps:
- providing, at a surface of said laminated structure, an array or matrix either of one or more RF transmitters and one or more RF receivers or of two or more RF transceivers;
- activating, in an initial stage in which the laminated structure is deemed to be faultless, said one or more RF transmitters or transceivers to transmit a measuring signal in a surface wave mode, comprising a surface wave which is suitable to travel along the structure's surface and/or in a bound mode, comprising a surface wave which is suitable to travel through the structure, however being bounded inside the structure's surfaces, and measuring the mutual signal attenuation and/or phase and/or reflection data;
- storing the measured signal attenuation and/or phase and/or reflection data;
- activating, in an operational stage, in which the laminated structure could be faultless or faulty, said one or more RF transmitters or transceivers to transmit a measuring signal in a surface wave mode, comprising a surface wave which is suitable to travel along the structure's surface and/or in a bound mode, comprising a surface wave which is suitable to travel through the structure, however being bounded inside the structure's surfaces, and measuring the mutual signal attenuation and/or phase and/or reflection data;
- comparing the signal attenuation and/or phase and/or reflection data in said initial stage to the signal attenuation and/or phase and/or reflection data in the operational stage;
- calculating, from the comparison result, whether the laminated structure is or is not faulty and determining, if possible, the faulty location or locations.

In electromagnetics in general and antenna theory in particular surface waves are known. For example large array antennas or antennas with a thick substrate can suffer from surface waves, i.e. waves that are excited in the layer and do not radiate outwards. However, one can also deliberately generate these surface waves and use them as a measurement signal, as is proposed here, to monitor layered structures.

Surface waves are defined in this specification as waves that propagate along interfaces of different media. Waves that are "caught" in a certain layer between two different media are often called surface waves as well, however, strictly speaking those waves should be called bounded mode waves. Both types of waves will be used here and will both be used under the name surface waves.

The invention will be discussed in more detail with reference to some figures.
- Figure 1: shown a cross-sectional view of a layered structure and an exemplary embodiment of a device for detecting faults in it;
- Figure 2: shows a top view of the exemplary embodiment shown in figure 1;
- Figure 3: shows a concept of the proof of principle setup;
- Figure 4: shows a schematically overview of measurement setup;
- Figure 5: shows measurement results for different defect types;
- Figures 6a-c: show a comparison between measured and simulated results.

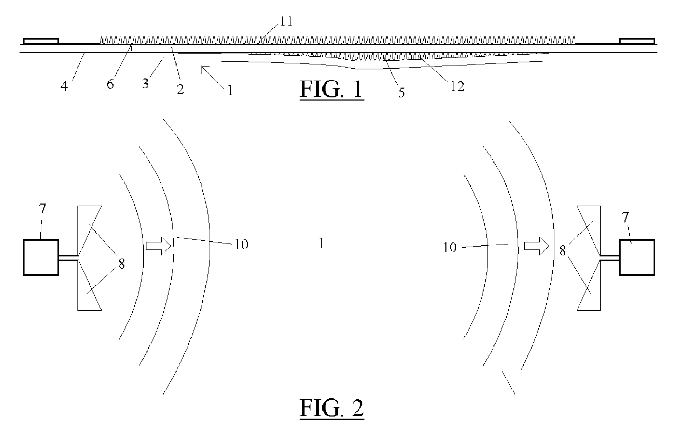

Figure 1 and 2 show a structure 1, e.g. part of a wind turbine wing, which -see figure 1- includes two layers 2 and 3 which are adhered to another during production but which could -e.g. after lengthy operation- loosen from each other at some locations, e.g. due to imperfection in their intermediate adhesion layer 4, resulting in air gaps 5 inside the layered structure 1. Besides air gaps 5 between the layers 2 and 3, cracks 6 may originate in one or both layers after lengthy operation.

To be able to detect such faults 5 and 6 and possible other faults in the structure 1 and/or upon its surface (e.g. undesired deposits), an array or matrix either of one or more RF transmitters and one or more RF receivers or of two or more RF transceivers is provided on the surface of the laminated structure 1. One couple of such RF transceivers is shown in the figures 1 and 2. Each transceiver 7 is connected to a broadband dipole antenna 8, attached to the surface of the layered structure 1. Each transceiver 7 is fed by a long-life battery. Besides, each transceiver is enabled to be in (preferably) wireless communication with a control and processing centre (not shown). Each transceiver be used for, under wireless control of the control centre, transmitting a measuring signal 10 to other transceivers acting as receivers or -e.g. in another time slot- for receiving measuring signals transmitted by other transceivers acting as transmitters. In this way the inside and outside condition of the layered structure can be monitored by means of the various transceivers 7, attached to the (outer) surface of the structure, e.g. of wind turbine wings.

The method for detecting faults in laminated structures comprises next steps:
- activating, in an initial stage in which the laminated structure is deemed to be faultless, the RF transceivers 7 to transmit a measuring signal 10 in a surface wave mode, comprising a surface wave 11 which is suitable to travel along the structure's surface and/or in a bound mode, comprising a surface wave 12 which is suitable to travel through the structure (i.e. through any air gap 5 inside the structure), however being bounded inside the structure's surfaces, and measuring -in the control and processing centre, via the wireless communication links of each transceiver 7- the mutual signal attenuation and/or phase and/or reflection data and mapping and storing it;
- activating, in an operational stage, in which the laminated structure could be faultless or faulty, i.e. during operation of the structure (e.g. during operation of the wind turbine), the RF transceivers 7 to transmit a measuring signal in a surface wave mode, comprising a surface wave 11 which is suitable to travel along the structure's surface and/or in a bound mode, comprising a surface wave 12 which is suitable to travel through the structure, however being bounded inside the structure's surfaces, and measuring the mutual signal attenuation and/or phase and/or reflection data;
- comparing, by the control and processing centre, the signal attenuation and/or phase and/or reflection data in the initial stage to the signal attenuation and/or phase and/or reflection data in the operational stage and calculating, from the comparison result, whether the laminated structure is or is not faulty and determining, if possible, the faulty location or locations.

In this way the health of e.g. wind turbine blades or other layered structures can be continuously monitored in stead of inspecting them at regular intervals with costly down times. The invention provides a cheap technique, since no labour is involved and no expensive equipment is required and can be used as a valuable early warning system.

To verify the principle, measurements have been performed. First, the design is described, next the measurements itself are described and finally the results are discussed.

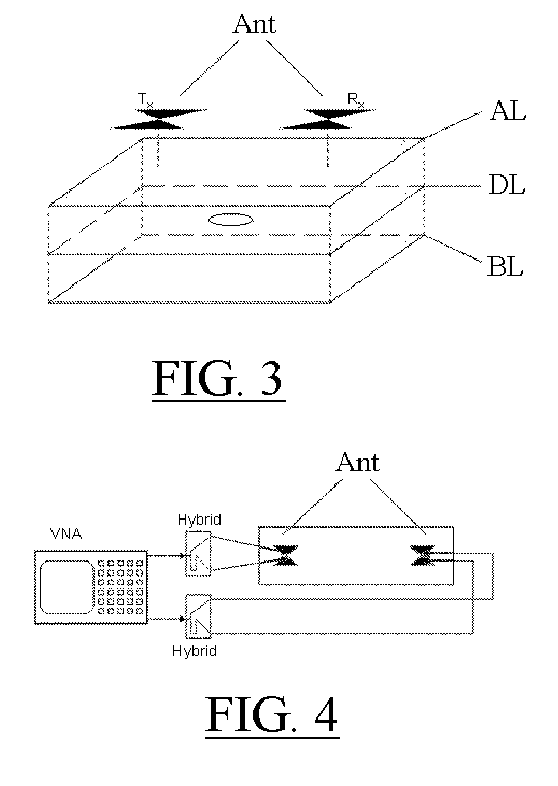

Figure 3 shows a concept of the proof of principle setup to verify the principle. On top two antennas can be seen at two distinct locations. The antennas are bow-tie antennas optimized for the material of the layers. These antennas are etched on top of the antenna layer. The antenna layer (AL), the defect layer (DL) and the bottom layer (BL) are all 1.6mm thick FR4 slabs. The antenna layer is constructed from a FR4 slab with copper and photo resist on both sides. On one side the copper is completely removed using photo etching, on the other side the two antennas are photo etched. The defect layer is also constructed from a slab with copper on both sides. All the copper is removed. A defect can be created in this layer. All the copper on the bottom layer is also removed. This layer is totally intact and is used to burry the defects of the defect layer. The layers are pressed onto each other using nylon screws in the screw holes shown in the lower left and upper right corner of the layers. A typical size of the layers is 30x30cm. All the layers are 1.6mm high FR4 PCB's.

This way a setup is created that is flexible, which means that different defects can be inserted and compared to an intact situation. For example, an internal delamination can be created by inserting a defect layer with a ditch on its top or bottom. A defect layer that is intact, has a hole in it and has a hole with an electrically conducting material in it has been measured. The transmission and receiving of the signals will take place by using a network analyzer. This way a complex representation of the transmission can be determined (magnitude and phase).

First, the setup is measured using an intact defect layer. The reflection coefficient of the Tₓ antenna (S₁₁) and the transmission coefficient between the two antennas (S₂₁) is measured. Next, the S₁₁ and S₂₁ with the two different defect layers is measured. A layer with a single hole (diameter about 10mm) drilled in it is used.

Measurements as described before have been performed in the period between 2 and 16 of March, 2009. The measurements to verify the stacked setup have been performed using a HP8753 Vector Network Analyzer (VNA), and the measurements of the defect structures have been performed on a HP8753 VNA and a HP8510 VNA. Two different network analyzers have been used to cover the whole frequency band of interest.

The measurement setup is shown in Figure 4. Balanced fed bow-tie antennas have been used; the approach shown in Figure 3 is used. Measurements have been performed with an intact defect layer, a defect layer with a 10mm hole in its centre and a defect layer with a 10mm Perfectly Electrically Conducting (PEC) disc is placed in this hole.

First a calibration measurement is performed. The cables are not led to the bow-tie antennas but are connected directly towards each other. This way all losses, except the transmission losses are measured. This way the losses in the connectors, hybrids and cables are measured. The amount of signal that is lost due to these factors are subtracted from the actual measured values. This way a measurement is performed which only takes the actual measurement into account.

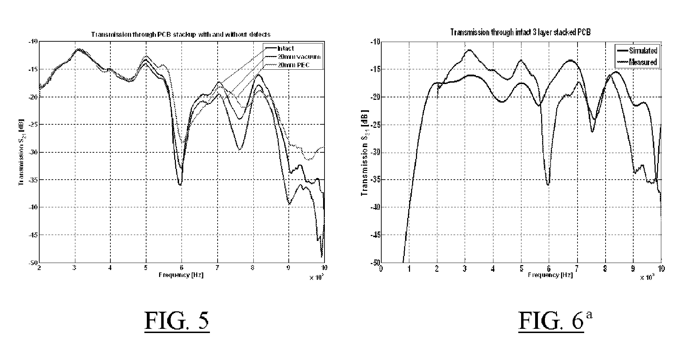

In Figure 5 the results of these measurements are shown. It can be seen there that for frequencies above 5GHz the effects of the defect result in a change in transmission.

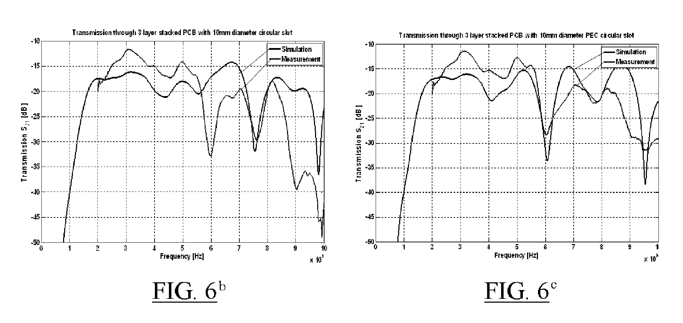

In Figures 6a-c the measured values are compared to simulation results. In these figures it can be seen that the general trend can be observed, however the transmission levels are not predicted very accurate. This seems to be a problem with calibration, especially since the difference increases with frequency.

In this patent application a novel measurement technique to monitor layered structures is presented. The technique is based on using surface waves (and bounded modes) as measurement signal. A surface wave is generated at one point on the surface of the layer of interest and received at either the same point (reflection) or at another point on the surface of the layer of interest (transmission). From the delay time the position of a possible defect can be found and the frequency distortion indicates the size and shape of the defect. Array techniques can be used to increase resolution. The invention is suited to monitor e.g. rotor blades of wind turbines and wings of airplanes. One important advantage is that it can be used to monitor a whole material layer in contrast to local inspection techniques. Moreover, it is inexpensive.

Finally, it is noted that, a layered structure may be provided with a conducting coating on top of one of its layers. Such conductive coating prevents waves from radiating outwards of the structure. This effect can be used to keep the bounded modes inside the structure. This way more energy is preserved in the wave and a longer distance can be bridged. Further, detection of false defects caused by material attaching at the outside of the layers is prevented. Rotor blades of wind turbines are sometimes coated with a conductive lightning protection layer. Such conducting layer can advantageously be used in the way described above. The transmit and receive antennas, however, cannot be placed on top of the conductive layer because no waves would penetrate inside the material. Therefore the antennas have to be placed at the inner surface of the blades or inside the material.

## Claims

1. Method for detecting faults in laminated structures, the method comprising next steps:
- providing, at a surface of said laminated structure (1), an array or matrix either of one or more RF transmitters and one or more RF receivers or of two or more RF transceivers (7);
- activating, in an initial stage in which the laminated structure is deemed to be faultless, said one or more RF transmitters or transceivers to transmit a measuring signal in a surface wave mode, comprising a surface wave which is suitable to travel along the structure's surface and/or in a bound mode, comprising a surface wave which is suitable to travel through the structure, however being bounded inside the structure's surfaces, and measuring the mutual signal attenuation and/or phase and/or reflection data;
- storing the measured signal attenuation and/or phase and/or reflection data;
- activating, in an operational stage, in which the laminated structure could be faultless or faulty, said one or more RF transmitters or transceivers to transmit a measuring signal in a surface wave mode, comprising a surface wave which is suitable to travel along the structure's surface and/or in a bound mode, comprising a surface wave which is suitable to travel through the structure, however being bounded inside the structure's surfaces, and measuring the mutual signal attenuation and/or phase and/or reflection data;
- comparing the signal attenuation and/or phase and/or reflection data in said initial stage to the signal attenuation and/or phase and/or reflection data in the operational stage;
- calculating, from the comparison result, whether the laminated structure is or is not faulty and determining, if possible, the faulty location or locations.

2. System for detecting faults in laminated structures, comprising at a surface of said laminated structure (1), an array or matrix either of one or more RF transmitters and one or more RF receivers or of two or more RF transceivers (7); and a control and processing centre arranged for:
- activating, in an initial stage in which the laminated structure is deemed to be faultless, said one or more RF transmitters or transceivers to transmit a measuring signal in a surface wave mode, comprising a surface wave which is suitable to travel along the structure's surface and/or in a bound mode, comprising a surface wave which is suitable to travel through the structure, however being bounded inside the structure's surfaces, and measuring the mutual signal attenuation and/or phase and/or reflection data;
- storing the measured signal attenuation and/or phase and/or reflection data;
- activating, in an operational stage, in which the laminated structure could be faultless or faulty, said one or more RF transmitters or transceivers to transmit a measuring signal in a surface wave mode, comprising a surface wave which is suitable to travel along the structure's surface and/or in a bound mode, comprising a surface wave which is suitable to travel through the structure, however being bounded inside the structure's surfaces, and measuring the mutual signal attenuation and/or phase and/or reflection data;
- comparing the signal attenuation and/or phase and/or reflection data in said initial stage to the signal attenuation and/or phase and/or reflection data in the operational stage;
- calculating, from the comparison result, whether the laminated structure is or is not faulty and determining, if possible, the faulty location or locations.
